# EUROPÄISCHE PATENTSCHRIFT

(11) **EP 1 281 137 B1**
(45) Veröffentlichungstag und Bekanntmachung des Hinweises auf die Patenterteilung: **10.09.2003**
(21) Anmeldenummer: 00920322.5
(22) Anmeldetag: 09.05.2000
(51) Int. Cl.: G06F 17/60, G07F 7/10

(54) **TRANSAKTIONSVERFAHREN UND VERKAUFSSYSTEM**
TRANSACTION METHOD AND SELLING SYSTEM
PROCEDE DE TRANSACTION ET SYSTEME DE VENTE

(43) Veröffentlichungstag der Anmeldung: 05.02.2003
(73) Patentinhaber: Swisscom Mobile AG, 3050 Bern (CH)
(72) Erfinder: MARTSCHITSCH, Andreas, CH-3360 Herzogenbuchsee (CH); LAUPER, Eric, CH-3014 Bern (CH)
(74) Vertreter: BOVARD AG - Patentanwälte
(86) Internationale Anmeldenummer: CH0000258
(87) Internationale Veröffentlichungsnummer: WO01086515

(56) Entgegenhaltungen:
- WO-A-00/38443
- WO-A-96/13814
- WO-A-98/34203
- WO-A-98/54678
- WO-A-99/33034
- US-A- 5 352 876
- PATENT ABSTRACTS OF JAPAN vol. 1997, no. 01, 31. Januar 1997 (1997-01-31) & JP 08 249530 A (SANYO ELECTRIC CO LTD), 27. September 1996 (1996-09-27)

## Beschreibung

Die vorliegende Erfindung betrifft ein Transaktionsverfahren und ein Verkaufssystem. Insbesondere betrifft die vorliegende Erfindung ein Transaktionsverfahren zwischen einem Kunden und einem Dienstterminal, welches Dienstterminal durch Kunden selektierbare, kostenpflichtige Produkte und/oder Dienstleistungen vor Ort liefert, sowie ein Verkaufssystem, das eine Vielzahl solcher Dienstterminals umfasst.

Dienstterminals, die durch Kunden selektierbare, kostenpflichtige Produkte und/oder Dienstleistungen vor Ort liefern haben den Vorteil, dass sie in der Regel für Kunden jederzeit zur Verfügung stehen ohne dass dafür, abgesehen von Wartungsaufgaben und gegebenenfalls Nachfüllaufgaben, Personal benötigt wird. Als Beispiele für solche Dienstterminals sollen hier nicht abschliessend Verkaufsautomaten, beispielsweise für Konsumgüter wie Nahrungs- und/oder Genussmittel und/oder Gebrauchsgegenstände, Billettautomaten, automatisierte Zapfsäulen für Brennstoffe und Datenterminals zum Bezug von kostenpflichtigen Daten und/oder für den Zugang zu kostenpflichtigen Softwareapplikationen, beispielsweise Spielprogramme, und/oder Kommunikationsdiensten erwähnt werden. Im allgemeinen werden die Produkte und/oder Dienstleistungen durch diese Dienstterminals gegen vorgängige Barzahlung ausgeliefert (respektive verfügbar gemacht), wofür die Dienstterminals mit entsprechenden Mitteln zur Entgegennahme und Kontrolle von Bargeld in Form von Münzen und/oder Noten ausgerüstet sind.

In der Patentschrift US 5352876 wird ein Verkaufsautomat beschrieben, der einen Kartenleser umfasst, in den eine Kreditkarte mit einem darauf gespeicherten Kreditbetrag zur Bezahlung von auszuliefemden Gütern eingeführt werden kann. Gemäss der Patentschrift US 5352876 kann der Kreditbetrag durch den Verkaufsautomaten nach erfolgter Überprüfung eines vom Kunden eingegebenen Geheimcodes und nach erfolgter Kreditüberprüfung durch ein Kreditzentrum auch auf die Kreditkarte geladen werden.

Herkömmliche Verkaufssysteme mit Dienstterminals, die durch Kunden selektierbare, kostenpflichtige Produkte und/oder Dienstleistungen vor Ort liefern, weisen jedoch den Nachteil auf, dass die Kunden entweder passendes Bargeld in einer bestimmten Währung verfügbar haben müssen, da die herkömmlichen Dienstterminals in der Regel nur die lokale Landeswährung unterstützen, oder dass die Kunden eine vom Verkaufssystem akzeptierte Kreditkarte auf sich tragen müssen. Zudem können herkömmliche Dienstterminals jeweils nur einen Kunden bedienen, das heisst die Anforderung, Bezahlung und Auslieferung von Produkten und/oder Dienstleistungen werden in den herkömmlichen Dienstterminals jeweils für einen Kunden durchgeführt und abgeschlossen bevor ein anderer Kunde bedient werden kann.

In der Patentanmeldung WO 98/54678 wird ein System für den Zugriff auf Benzinzapfsäulen und für die Füllung des Benzintanks von Kraftfahrzeugen mittels dieser Benzinzapfsäulen beschrieben. Gemäss WO 98/54678 werden von einem Benutzer eine Identifizierung der Benzinzapfsäule und ein Zutrittscode eingegeben und mittels eines Mobilfunktelefons an eine zentrale Steuereinheit übermittelt. In der zentralen Steuereinheit wird der Zutrittscode gemäss WO 98/54678 überprüft und die identifizierte Zapfsäule gegebenenfalls für die Füllung des Benzintanks freigeschaltet. Gemäss WO 98/54678 kann in der zentralen Steuereinheit zudem überprüft werden, ob der betreffende Benutzer in einer Sperrliste eingetragen ist.

Es ist eine Aufgabe der vorliegenden Erfindung, ein neues und besseres Transaktionsverfahren zwischen einem Kunden und einem Dienstterminal, welches Dienstterminal durch Kunden selektierbare, kostenpflichtige Produkte und/oder Dienstleistungen vor Ort liefert, und ein neues und besseres Verkaufssystem, das eine Vielzahl solcher Dienstterminals umfasst, vorzuschlagen, welche insbesondere nicht die Nachteile des Stands der Technik aufweisen.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Dieses Ziel wird durch die vorliegende Erfindung insbesondere dadurch erreicht, dass das Dienstterminal über eine kontaktlose Geräteschnittstelle, die vom oben erwähnten Mobilfunknetz unabhängig ist, ein ausführbares Selektionsprogramm an ein tragbares Mobilgerät überträgt, beispielsweise ein Mobilfunktelefon oder ein kommunikationsfähiger Personal Digital Assistant (PDA), oder Laptop- oder Palmtop-Computer, wobei das Selektionsprogramm auf einer Anzeige des Mobilgeräts Produkte und/oder Dienstleistungen, die im Dienstterminal verfügbar sind, zur Selektion durch den Kunden auflistet, und das Selektionsprogramm auf Grund eines vom Kunden selektierten Produkts und/oder einer selektierten Dienstleistung einen Anforderungsbeleg generiert, der eine Dienstterminalidentifizierung des Dienstterminals und eine Objektidentifizierung des gewünschten Produkts oder der gewünschten Dienstleistung umfasst, und mittels der Kommunikationsfunktionen des Mobilgeräts über ein Mobilfunknetz an eine Dienstzentrale übermittelt. Der Vorteil dieses Selektionsprogramms besteht insbesondere darin, dass der Kunde keine Objektidentifizierungen von Produkten und/oder Dienstleistungen eintippen muss, wodurch diesbezügliche Eingabefehler vermieden werden können. Die Objektidentifizierung wird von der Dienstzentrale über das Kommunikationsnetz an das Dienstterminal übermittelt, welches das durch die Objektidentifizierung bestimmte Produkt oder die durch die Objektidentifizierung bestimmte Dienstleistung ausliefert. Ein Vorteil dieser Lösung besteht darin, dass die Kunden für die Selektion eines gewünschten Produkts und/oder einer gewünschten Dienstleistung nicht auf die durch das Dienstterminal zur Verfügung gestellte Benutzerschnittstelle angewiesen sind und folglich mehrere Kunden mit ihren Mobilgeräten die Auslieferung von Produkten und/oder Dienstleistungen gleichzeitig anfordem können.

In einer Ausführungsvariante überprüft die Dienstzentrale die Kreditwürdigkeit des Kunden, von dem der Anforderungsbeleg übermittelt wurde, und bei positiver Kreditwürdigkeit übermittelt sie einen Kreditbeleg, der mindestens einen Kreditwert umfasst, über ein Kommunikationsnetz, beispielsweise ein Mobilfunknetz, an das durch die Dienstterminalidentifizierung bestimmte Dienstterminal. Gemäss dieser Ausführungsvariante gibt das Dienstterminal auf Grund des empfangenen Kreditbelegs die Selektion mindestens eines der Produkte und/oder mindestens einer der Dienstleistungen frei, liefert entsprechend der vom Kunden getätigten Selektion das gewünschte Produkt oder die gewünschte Dienstleistung aus und übermittelt eine Auslieferungsbestätigung, die einen Kostenbetrag des ausgelieferten Produkts oder der ausgelieferten Dienstleistung umfasst, an die Dienstzentrale, welche den Kostenbetrag des ausgelieferten Produkts oder der ausgelieferten Dienstleistung dem betreffenden Kunden verrechnet. Durch die Kreditüberprüfung vor der Übermittlung des Kreditbelegs an das Dienstterminal können die Dienstterminals von unnötigen Anfragen durch nicht kreditwürdige Kunden entlastet werden. Ein Vorteil dieser Lösung besteht darin, dass durch die zentralisierte Verrechnung der entstehenden Kosten Währungsumrechnungen von der Währung des betreffenden Kostenbetrags in die Währung des betreffenden Kundenkontos ohne notwendige Vorkehrungen in den zahlreichen Dienstterminals vorgenommen werden können, wobei als Kundenwährung auch Punkte von Loyalitätspunkteprogrammen zugelassen und behandelt werden können, so dass Kunden nicht über Bargeld einer vom Dienstterminal unterstützten Währung verfügen müssen. Insbesondere wenn das verwendete Mobilfunknetz länderübergreifendes Roaming unterstützt, was beispielsweise in GSM-, UMTS-Mobilfunknetzen oder auch in anderen, beispielsweise satellitenbasierten Mobilfunknetzen der Fall ist, besteht ein weiterer Vorteil dieser Lösung darin, dass das erfindungsgemässe Verkaufssystem länderübergreifend ausgeführt und benützt werden kann.

In einer Ausführungsvariante fordert das Dienstterminal vor der Auslieferung des gewünschten Produkts und/oder der gewünschten Dienstleistung den Kunden auf, zur Bestätigung das gewünschte Produkt oder die gewünschte Dienstleistung auszuliefern, eine Bestätigung einzugeben. Diese Bestätigung kann beispielsweise durch Betätigen einer entsprechenden Funktionstaste und/oder durch Eingabe einer Bestätigungsinformation erfolgen, zum Beispiel eine vordefinierte Anzahl Endziffern der Rufnummer des betreffenden Mobilgeräts, die das Dienstterminal mit Endziffern vergleicht, die zusammen mit dem Kreditbeleg an das Dienstterminal übertragen wurden. Durch die Bestätigung kann vermieden werden, dass nicht gewünschte Produkte und/oder Dienstleistungen ausgeliefert werden. Durch die Eingabe und Überprüfung der Bestätigungsinformation kann zudem verifiziert werden, dass es sich um denjenigen Kunden handelt, von dem der Anforderungsbeleg übermittelt wurde.

In einer Ausführungsvariante übermittelt die Dienstzentrale den Kreditbeleg zusammen mit einer Dienstterminalidentifizierung des Dienstterminals, von welchem das Produkt und/oder die Dienstleistung angefordert wird, über das Kommunikationsnetz an eine Dienstterminalzentrale, welche Dienstterminalzentrale den Kreditbeleg über eine Kommunikationsverbindung an das durch die Dienstterminalidentifizierung bestimmte Dienstterminal leitet. Diese Ausführungsvariante ist insbesondere dann vorteilhaft, wenn die Dienstterminals nicht so eingerichtet sind, dass sie von der Dienstzentrale direkt über das Kommunikationsnetz Daten empfangen können, so dass die fehlenden Funktionen solcher Dienstterminals durch die Dienstterminalzentrale für mehrere solcher Dienstterminals übernommen werden kann.

Nachfolgend wird eine Ausführung der vorliegenden Erfindung anhand eines Beispieles beschrieben. Das Beispiel der Ausführung wird durch folgende beigelegten Figuren illustriert:
Figur 1 zeigt ein Blockdiagramm, das schematisch ein Verkaufssystem mit einer Dienstzentrale und mehreren Dienstterminals sowie ein Mobilgerät, das mit dem Verkaufssystem über ein Mobilfunknetz verbunden ist, darstellt.
Figur 2a zeigt schematisch einen möglichen Aufbau eines Anforderungsbelegs.
Figur 2b zeigt schematisch einen weiteren möglichen Aufbau eines Anforderungsbelegs.
Figur 3 zeigt ein Zeitdiagramm, das schematisch den Informationsfluss zwischen dem Mobilgerät, der Dienstzentrale und dem Dienstterminal illustriert, wobei der mögliche Informationsfluss im Dienstterminal sowie gewisse mögliche Operationen des Dienstterminals ebenfalls dargestellt werden.

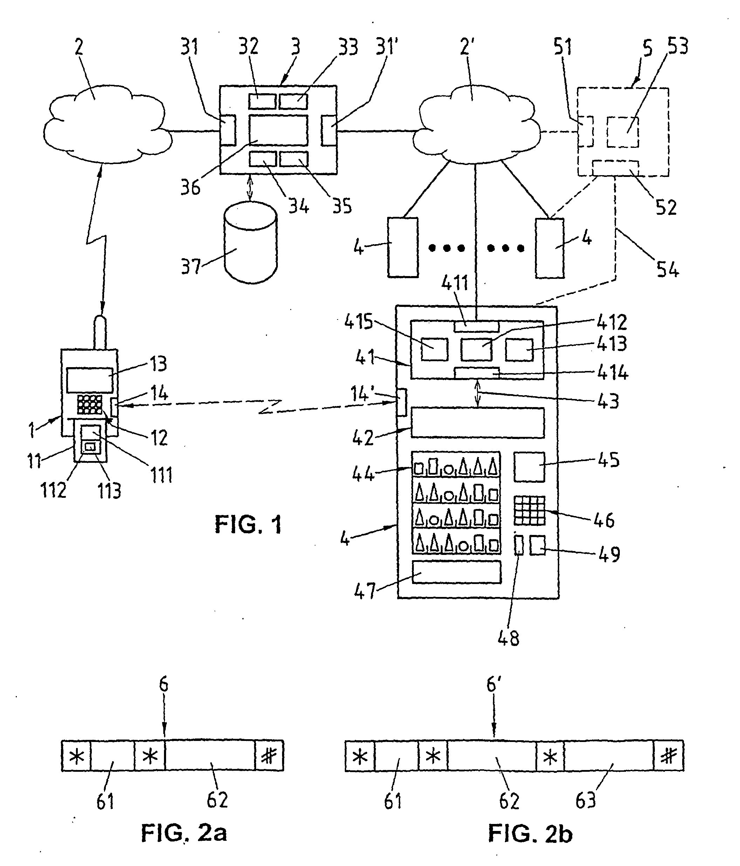

Das Bezugszeichen 1 in der Figur 1 bezieht sich auf ein Mobilgerät, beispielsweise ein Mobilfunktelefon, oder ein Personal Digital Assistant (PDA), einen Palmtop- oder einen Laptop-Computer, welche jeweils so eingerichtet sind, dass sie über das Mobilfunknetz 2, beispielsweise ein GSM- oder ein UMTS-Mobilfunknetz oder ein anderes, beispielsweise satellitenbasiertes Mobilfunknetz, kommunizieren können. Das Mobilgerät 1 umfasst eine Chipkarte 11 mit Prozessor 111 und Daten- und Programmspeicher 112, beispielsweise eine SIM-Karte 11 (Subscriber Identification Module). Das Mobilgerät 1 verfügt zudem über eine Anzeige 13 und Bedienungselemente12, sowie optional über eine kontaktlose Geräteschnittstelle 14, beispielsweise eine Infrarotschnittstelle oder eine Funkschnittstelle, zum Beispiel eine Bluetooth-Funkschnittstelle.

In der Figur 1 bezieht sich das Bezugszeichen 4 auf ein Dienstterminal, das durch Kunden selektierbare, kostenpflichtige Produkte und/oder Dienstleistungen vor Ort liefert. Beispiele für solche Dienstterminals 4 wurden bereits in der Einleitung erwähnt. Für die Realisierung der vorliegenden Erfindung werden herkömmliche Dienstterminals der erwähnten Art mit einem Erweiterungsmodul 41 ausgestattet, welches in das Gehäuse des herkömmlichen Dienstterminals integriert oder als separate Einheit ausgeführt ist, wobei das Erweiterungsmodul 41, beispielsweise über eine Kabelverbindung, mit dem Dienstterminalkontrollerbus 43 des Dienstterminalkontrollers 42 des herkömmlichen Dienstterminals verbunden wird. Die Funktionalität des Erweiterungsmoduls 41 kann auch direkt in den Dienstterminalkontroller 42 integriert werden. Wie in den herkömmlichen Dienstterminals der erwähnten Art umfasst das Dienstterminal 4 neben dem Dienstterminalkontroller 42 weitere Komponenten und/oder Module, die durch den Dienstterminalkontroller 42 gesteuert werden können: das eigentliche Dienstleistungsmodul 44, beispielsweise wie in der Figur 1 angedeutet eine (z.B. elektromechanische) Vorrichtung, die die kostenpflichtigen Produkte enthält und diese beispielsweise durch die Produktausgabevorrichtung 47 ausliefern kann, oder ein betriebsbereiter Computer mit kostenpflichtigen Softwareapplikationen und/oder Zugriff zu Datenbanken, eine Anzeige 45 zum Darstellen von Informationen und Instruktionen für Kunden des Dienstterminals 4, Bedienungselemente 46 zur Eingabe von Informationen und Instruktionen durch die Kunden. Optional umfasst das Dienstterminal 4 zudem, wie herkömmliche Dienstterminals der erwähnten Art, eine Bezahlungsvorrichtung 48, die beispielsweise Münzen, Noten und/oder Kreditkarten als Zahlungsmittel entgegennehmen und verarbeiten kann, sowie eine Wechselgeldvorrichtung 49, die gegebenenfalls Wechselgeld herausgeben kann. Gemäss der vorliegenden Erfindung können die Bezahlungsvorrichtung 48 und die Wechselgeldvorrichtung 49 eines herkömmlichen Dienstterminals der erwähnten Art durch das Erweiterungsmodul 41 ersetzt werden, wenn die Möglichkeit zur Bezahlung mittels Bargeld und/oder Kreditkarte nicht beibehalten werden soll. Das Dienstterminal 4 umfasst auch ein nicht dargestelltes Speisemodul, beispielsweise ein mit dem Stromnetz verbindbares Netzteil und/oder, insbesondere für den mobilen Betrieb, eine Batterie und/oder Solarzellen.

Das Erweiterungsmodul 41 umfasst ein Kommunikationsmodul 411 mit sämtlichen Hardware- und/oder Softwarekomponenten für den Datenaustausch über das Kommunikationsnetz 2', beispielsweise ein Festnetz, zum Beispiel ein LAN (Local Area Network), das öffentliche geschaltete Telefonnetz oder ein IP-Netz (Internet Protocol), oder ein Mobilfunknetz zum Beispiel ein GSModer ein UMTS-Mobilfunknetz oder ein anderes, beispielsweise satellitenbasiertes Mobilfunknetz. Des weiteren umfasst das Erweiterungsmodul 41 ein Buskontrollmodul 414 mit den Hardware- und/oder Softwarekomponenten für die Kommunikation über den Dienstterminalkontrollerbus 43 mit dem Dienstterminalkontroller 42. Die Anbindung an die Steuerung des Dienstterminals 4 erfolgt beispielsweise über das MDB-Protokoll, gemäss dem Internal Communication Protocol, das von der European Vending Machine Manufacturers Association spezifiziert wurde und sowohl die physikalische als auch die logische Schnittstelle definiert (Version 2.2, vom 8. Oktober 1997). Der Dienstterminalkontrollerbus 43 ist beispielsweise ein serieller Stromschleifenbus gemäss der MDB-Spezifikation Kapitel 1 und 2. Das Erweiterungsmodul 41 umfasst zudem programmierte Softwaremodule, die auf einem nicht dargestellten Prozessor des Erweiterungsmoduls 41 ausgeführt werden, nämlich das Transaktionsmodul 412 und das Bestätigungsmodul 413, deren Funktion später beschrieben wird, sowie, in einer Ausführungsvariante ein in einem Mobilgerät 1 ausführbares Selektionsprogramm 415, das in einem Speicher des Erweiterungsmoduls 41 gespeichert ist.

In der Figur 1 bezieht sich das Bezugszeichen 3 auf eine Dienstzentrale, die auf einem handelsüblichen Server (Computer) basiert und ein Kommunikationsmodul 31 mit den Hard- und Softwarekomponenten zur Kommunikation über das Mobilfunknetz 2 sowie ein Kommunikationsmodul 31' mit den Hard- und Softwarekomponenten zur Kommunikation über das Kommunikationsnetz 2' umfasst. Die Dienstzentrale 3 umfasst zudem programmierte Softwaremodule, die auf einem nicht dargestellten Prozessor der Dienstzentrale 3 ausgeführt werden, nämlich das Filtermodul 32, das Kreditbelegmodul 33, das Kreditprüfmodul 34, das Verrechnungsmodul 35 sowie das Transaktionsmodul 36, deren Funktion später beschrieben wird. Wie aus der Figur 1 weiter ersichtlich ist, hat die Dienstzentrale 3 zudem Zugriff auf eine Datenbank 37, die ebenfalls später beschrieben wird.

Ein Kunde der ein Produkt und/oder eine Dienstleistung vom Dienstterminal 4 beziehen möchte fordert die Auslieferung dieses Produkts und/oder dieser Dienstleistung dadurch an, dass er mittels seines Mobilgeräts 1 einen Anforderungsbeleg 6, 6' (siehe Figuren 2a und 2b) über das Mobilfunknetz 2 an die Dienstzentrale 3 übermittelt. Der Anforderungsbeleg wird beispielsweise in einer Datenmeldung, beispielsweise eine SMS-Meldung (Short Message Services) oder eine USSD-Meldung (Unstructured Supplementary Services Data) oder ein Datenpaket des GPRS-Dienstes (Generalised Packet Radio Services), übermittelt. Die Verwendung von USSD-Meldungen wird der Verwendung von SMS-Meldungen vorgezogen, da USSD-Meldungen nicht wie die SMS-Meldungen im Store-and-Forward Modus sondern direkt und somit schneller übertragen werden können. Ausgesandte USSD-Meldungen werden vom Signalisierungssystem des Mobilfunknetzes 2, beispielsweise ein CCITT Signalisierungssystem Nummer 7 (SS7), an das Home Location Register (HLR) des betreffenden Kunden geleitet, von wo sie im vorliegenden Fall an die Dienstzentrale 3 weitergeleitet werden können. Ein Vorteil der Aussendung eines Anforderungsbelegs mittels einer USSD-Meldung, die beispielsweise im Standard GSM 02.90, 03.90 und/oder 04.90 für Unstructured Supplementary Service Data (USSD) vom European Telecommunications Standards Institute (ETSI) definiert wurde, besteht darin, dass dies sehr benutzerfreundlich ist, da es für einen Benutzer sehr einfach ist, eine USSD-Meldung zu verfassen und abzuschicken, beispielsweise einfacher als eine SMS-Meldung. Zudem können USSD-Meldungen von einem Benutzer, der in einem besuchten Netz roamt (Visited Public Land Mobile Network, VPLMN), von diesem VPLMN über das Signalisierungssystem automatisch an das HLR dieses Kunden weitergeleitet werden, auch wenn ausgehende Anrufe und/oder SMS-Meldungen für den Benutzer im VPLMN gesperrt sind. Ein weiterer Vorteil besteht darin, dass die Übermittlung einer USSD-Meldung schnell und kostenfrei erfolgen kann, da die USSD-Meldung über das Signalisierungssystem weitergeleitet wird.

Beispiele für den Aufbau der Anforderungsbelege 6, 6' zur Übermittlung als USSD-Meldungen sind in den Figuren 2a und 2b illustriert. Der in der Figur 2a dargestellte USSD-Anforderungsbeleg 6 umfasst einen auf ein *-Zeichen folgenden Dienstcode 61, darauffolgend ein weiteres *-Zeichen, auf das eine Dienstterminalidentifizierung 62 folgt sowie ein abschliessendes #-Zeichen. Der Dienstcode 61, beispielsweise eine Zahlenfolge, dient dazu den Dienst der durch die Datenmeldung eingeleitet werden soll anzuzeigen, nämlich die Anforderung von Produkten und/oder Dienstleistungen von Dienstterminals der erwähnten Art. Gemäss dem Standard GSM 02.90 (03.90, 04.90) für Unstructured Supplementary Service Data (USSD) vom European Telecommunications Standards Institute (ETSI) ist der Dienstcode 61 dreistellig und hat vorzugsweise einen Wert im Bereich von 100 bis 149, was zur Folge hat, dass eine solche USSD-Meldung von einem besuchten Netz (Visited Public Land Mobile Network, VPLMN) direkt ins Heimnetz (Home Public Land Mobile Network, HPLMN) geleitet wird. Der in der Figur 2b dargestellte USSD-Anforderungsbeleg 6' umfasst zusätzlich eine Objektidentifizierung 63, die vor dem abschliessenden #-Zeichen eingefügt ist und durch ein zusätzliches *-Zeichen von der Dienstterminalidentifizierung 62 abgegrenzt ist. Die Objektidentifizierung 63 dient dazu das gewünschte Produkt und/oder die gewünschte Dienstleistung zu bestimmen. Die Objektidentifizierungen von Produkten und/oder Dienstleistungen sind für den Kunden beim betreffenden Dienstterminal 4 angegeben.

Die Anforderungsbelege 6, 6' können beispielsweise Zeichen für Zeichen durch den Kunden mittels der Bedienungselemente 12 des Mobilgeräts 1 eingegeben und durch den SEND-Befehl über das Mobilfunknetz 2 ausgesendet werden. In einer Ausführungsvariante umfasst das Mobilgerät 1 ein Softwareprogramm 113 für die Generierung von Anforderungsbelegen, das beispielsweise auf der Chipkarte 11 in einem Speicher 112 gespeichert ist und auf dem Prozessor 111 der Chipkarte 11 oder auf einem anderen Prozessor des Mobilgeräts 1 ausgeführt wird. Dieses Softwareprogramm 113 kann beispielsweise mittels der Eingabemittel 12 des Mobilfunkgeräts 1 durch den Kunden aufgestartet werden. Das Softwareprogramm 113 generiert einen Anforderungsbeleg 6 mit dem Dienstcode zur Anforderung von Produkten und/oder Dienstleistungen von Dienstterminals und fordert den Kunden auf, beispielsweise über die Anzeige 13 des Mobilgeräts 1, die Dienstterminalidentifizierung 62 des Dienstterminals 4 einzugeben, von dem ein Produkt und/oder eine Dienstleistung angefordert werden soll, beispielsweise mittels der Eingabemittel 12 des Mobilgeräts 1. Dienstterminalidentifizierungen 62, die beispielsweise aus einer Zahlenfolge bestehen, sind für Kunden gut sichtbar auf dem Dienstterminal 4 angebracht. Die vom Kunden eingegebene Dienstterminalidentifizierung 62 wird vom Softwareprogramm 113 entgegengenommen und in den Anforderungsbeleg 6 eingefügt. Der erstellte Anforderungsbeleg 6 kann vom Softwareprogramm 113, beispielsweise nach vorgängiger Bestätigung durch den Kunden, mittels Kommunikationsfunktionen des Mobilgeräts 1 über das Mobilfunknetz 2 ausgesendet werden. Das Softwareprogramm 113 wird beispielsweise durch den gemäss GSM 11.14 definierten SIM-Toolkit unterstützt.

Wie oben erwähnt, wird der beschriebene USSD-Anforderungsbeleg 6, 6' direkt ins HPLMN weitergeleitet, wenn er in einem VPLMN ausgesendet wird. Zudem kann der Fachmann das HPLMN so definieren, dass USSD-Anforderungsbelege 6, 6' mit dem Dienstcode 61 (zur Anforderung von Produkten und/oder Dienstleistungen von Dienstterminals 4) an die Dienstzentrale 3 geleitet werden. Das Kommunikationsmodul 31 der Dienstzentrale 3 umfasst beispielsweise ein MAP-Interface, welches die oben beschriebene USSD-Meldung 6, 6' vom HLR mittels Meldungen des Mobile Application Part (MAP) entgegennehmen kann. Das MAP-Interface ist beispielsweise auf dem Server der Dienstzentrale 3 als Interworking Unit ausgeführt, die herkömmliche Hardwareund Software-Komponenten umfasst, um vom HLR MAP-Meldungen entgegenzunehmen, beispielsweise über ein SS7 Signalisierungssystem.

In der Dienstzentrale 3 werden die über das Kommunikationsmodul 31 entgegengenommenen USSD-Meldungen 6, 6', respektive die darin enthaltenen Daten, an das Filtermodul 32 weitergeleitet. Das Filtermodul 32 ist ein programmiertes Softwaremodul, das den in der entgegengenommenen USSD-Meldung 6, 6' enthaltenen Dienstcode 61 mit dem vordefinierten Dienstcode zur Anforderung von Produkten und/oder Dienstleistungen von Dienstterminals 4 vergleicht. Das Filtermodul 32 leitet die Daten von entgegengenommenen USSD-Meldungen 6, 6', die keinen Dienstcode zur Anforderung von Produkten und/oder Dienstleistungen von Dienstterminals 4 aufweisen, beispielsweise an nicht dargestellte Verarbeitungsmodule weiter. Daten von USSD-Meldungen 6, 6', die einen Dienstcode zur Anforderung von Produkten und/oder Dienstleistungen von Dienstterminals 4 aufweisen und vom Filtermodul 32 erkannt werden, werden als Anforderungsbelege 6, 6' entgegengenommen und zur weiteren Verarbeitung an das Transaktionsmodul 36 weitergeleitet.

Das Transaktionsmodul 36 initiiert auf Grund eines eingegangenen Anforderungsbelegs 6, 6' eine Transaktion, beispielsweise indem eine eindeutige Transaktionsnummer generiert wird und Transaktionsdaten dieser Transaktionsnummer zugeordnet abgespeichert werden. Neben der Dienstterminalidentifizierung 62 (und gegebenenfalls der Objektidentifizierung 63) und beispielsweise Zeit- und Datumsangaben betreffend den Eingang des Anforderungsbelegs 6, 6' werden vorzugsweise auch Angaben zur Identifizierung des betreffenden Kunden erfasst und als Transaktionsdaten abgespeichert. An dieser Stelle sollte erklärt werden, dass die Identität der Kunden jeweils durch die auf der SIM-Karte 11 gespeicherte International Mobile Subscriber Identity (IMSI) gegeben ist, die im HLR einer MSISDN-Nummer (Mobile Subscriber ISDN, Rufnummer) zugeordnet ist. Als Angaben zur Identifizierung des betreffenden Kunden können die IMSI und/oder die zugeordnete MSISDN, beispielsweise über das oben erwähnte MAP-Interface in der Dienstzentrale 3 erfasst und abgespeichert werden.

Auf Grund der Angaben zur Identifizierung des betreffenden Kunden bestimmt das Kreditprüfmodul 34 zum Beispiel aus einer Datenbank 37, beispielsweise eine Teilnehmerdatenbank, die vom Betreiber des Mobilfunknetzes 2 verwaltet wird, oder unter Zuhilfenahme von entsprechenden on-line Finanzdiensten von Finanzdienstleistern, die Kreditwürdigkeit des betreffenden Kunden. Bei mangelnder Kreditwürdigkeit kann beispielsweise vom Kreditprüfmodul 34 eine entsprechende Meldung, beispielsweise als USSD- oder SMS-Meldung, an das Mobilgerät 1 des Kunden übermittelt werden. Bei positiver Kreditwürdigkeit des Kunden wird durch das Kreditbelegmodul 33 ein Kreditbeleg generiert und über das Kommunikationsnetz 2' an das durch die Dienstterminalidentifizierung 62 bestimmte Dienstterminal 4 übermittelt. Falls das Kommunikationsnetz 2' ein Mobilfunknetz ist kann der Kreditbeleg in Form einer SMSoder USSD-Meldung an das betreffende Dienstterminal 4 übermittelt werden. Der Kreditbeleg enthält einen Kreditwert, beispielsweise zehn Schweizerfranken, der vordefiniert ist oder vom Kreditbelegmodul 33 unter Berücksichtigung des durch die Dienstterminalidentifizierung 62 bestimmten Dienstterminals 4, respektive der Kostenbeträge (Preise) der von diesem Dienstterminal 4 angebotenen Produkte und/oder Dienstleistungen, oder gegebenenfalls unter Berücksichtigung das Kostenbetrags (Preis) des durch die Objektidentifizierung 63 bestimmten Produkts oder Dienstleistung festgelegt wird. Der Kreditbeleg enthält beispielsweise auch die oben erwähnte Transaktionsnummer und/oder die Dienstterminalidentifizierung 62 und/oder gegebenenfalls die Objektidentifizierung 63. An Stelle der Transaktionsnummer können auch Angaben zur Identifizierung des Kunden, beispielsweise dessen IMSI oder MSISDN-Nummer als Transaktionsidentifizierung verwendet werden. Die MSISDN-Nummer oder der wenigstens eine vordefinierte Anzahl Endziffern der MSSIDN-Nummer kann überdies zu Bestätigungszwecken, worauf später eingegangen wird, zusammen mit dem Kreditbeleg an das betreffende Dienstterminal 4 übermittelt werden.

An dieser Stelle soll zudem erwähnt werden, dass die Kommunikation zwischen der Dienstzentrale 3 und den Dienstterminals 4 auch über die in der Figur 1 gestrichelt dargestellte Dienstterminalzentrale 5 erfolgen kann. Dabei werden beispielsweise die Kreditbelege vom Kommunikationsmodul 31' über das Kommunikationsnetz 2' an die Dienstterminalzentrale 5 übermittelt, wo sie vom entsprechenden Kommunikationsmodul 51 der Dienstterminalzentrale 5 entgegengenommen werden und vom Umleitmodul 53, unter Zuhilfenahme des Schnittstellenmoduls 52, an das durch die Dienstterminalidentifizierung 62 bestimmte Dienstterminal 4 weitergeleitet werden. Das Kommunikationsmodul 51 und das Schnittstellenmodul umfassen sämtliche notwendigen Hard- und Softwarekomponenten, für die Kommunikation über das Kommunikationsnetz 2', respektive über die Kommunikationsverbindung 54, beispielsweise eine serielle Schnittstelle (z.B. RS 232 oder RS 485) zu jeweils einem Dienstterminal 4.

Der Kreditbeleg wird im Erweiterungsmodul 41 der Dienstzentrale 4 vom Kommunikationsmodul 411 über das Kommunikationsnetz 2', respektive über die Kommunikationsverbindung 54, entgegengenommen. Das Kommunikationsmodul 411 umfasst sämtliche notwendigen Hard- und Softwarekomponenten für die Kommunikation über das Kommunikationsnetz 2', respektive über die Kommunikationsverbindung 54.

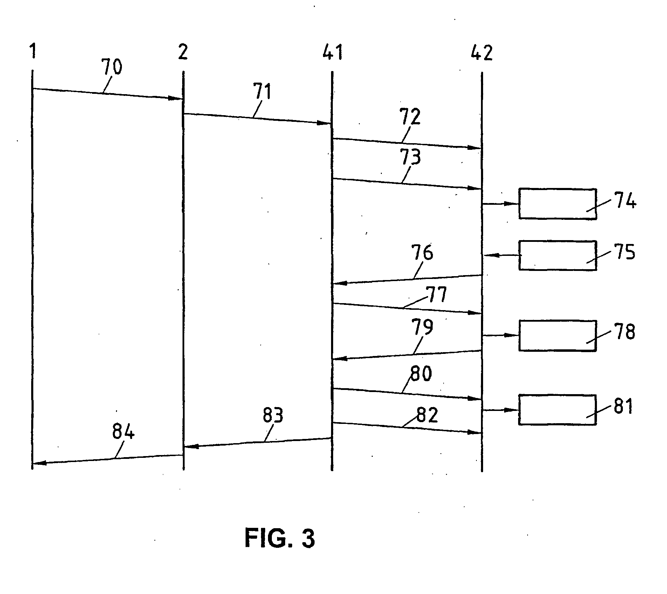

In der Figur 3 wird der Informationsfluss zwischen dem Mobilgerät 1, der Dienstzentrale 3 und einem Dienstterminal 4 schematisch illustriert. Mit dem Pfeil 70 wird die Übermittlung des Anforderungsbelegs 6, 6' vom Mobilgerät 1 an die Dienstzentrale 3 angedeutet. Mit dem Pfeil 71 wird die Übermittlung des Kreditbelegs von der Dienstzentrale 3 an das Dienstterminal 4 angedeutet. Der Informationsfluss zwischen dem Erweiterungsmodul 41 und dem Dienstterminalkontroller 42 ist hier nur beispielhaft angegeben und hängt vom Typ des verwendeten Dienstterminals 4, respektive des Dienstterminalkontrollers 42 ab.

Wie in der Figur 3 illustriert wird gibt das Transaktionsmodul 412 des Erweiterungsmoduls 41 auf Grund des eingegangenen Kreditbelegs eine durch den Pfeil 72 angedeutete Instruktion "Open Session" und danach eine durch den Pfeil 73 angedeutete Instruktion "Enable Credit" mit dem im Kreditbeleg enthaltenen Kreditwert an den Dienstterminalkontroller 42. Das Transaktionsmodul 412 behandelt ankommende Kreditbelege und kann so ausgeführt werden, dass es gleichzeitig mehrere Anforderungstransaktionen (Kreditbelege), die jeweils durch deren zugeordnete Transaktionsnummern unterschieden werden, zwischenspeichern und beispielsweise FIFO-mässig (first in-first out) behandeln kann. Wie im Schritt 74 angedeutet, wird darauf vom Dienstterminalkontroller 42 der Kreditwert auf der Anzeige 45 des Dienstterminals 4 angezeigt und die Selektion eines gewünschten Produkts und/oder einer gewünschten Dienstleistung für den Kunden freigegeben. Im Schritt 75 nimmt der Dienstterminalkontroller 42 die Selektion des gewünschten Produkts oder der gewünschten Dienstleistung über die Bedienungselemente 46 des Dienstterminals 4 entgegen. Wie durch den Pfeil 76 angedeutet wird, gibt der Dienstterminalkontroller 42 nach erfolgter Selektion die Rückmeldung "Request Dispense" an das Erweiterungsmodul 41, beispielsweise zusammen mit der Objektidentifizierung und/oder des Kostenbetrags (Preis) des selektierten Produkts oder der selektierten Dienstleistung.

Vor der eigentlichen Auslieferung des selektierten Produkts oder der selektierten Dienstleistung kann nun das Bestätigungsmodul 413 den Dienstterminalkontroller 42 instruieren vom Kunden die Eingabe einer Bestätigung anzufordern. Diese Bestätigung kann beispielsweise durch Betätigen einer entsprechenden Funktionstaste und/oder durch Eingabe einer Bestätigungsinformation erfolgen, zum Beispiel eine vordefinierte Anzahl Endziffern der Rufnummer (MSISDN) des betreffenden Mobilgeräts 1, die das Bestätigungsmodul 413 mit Endziffern vergleicht, die zusammen mit dem Kreditbeleg an das Dienstterminal 4 übertragen wurden. Beispielsweise nach dieser erfolgten Bestätigung gibt das Transaktionsmodul 412 (oder das Bestätigungsmodul 413) die Instruktion "Allow Dispense" an den Dienstterminalkontroller 42, wie in der Figur 3 durch den Pfeil 77 angedeutet wird. Danach wird im Schritt 78 das selektierte Produkt oder die selektierte Dienstleistung ausgeliefert und wie durch den Pfeil 79 angedeutet, wird die Rückmeldung "Dispense Confirm" vom Dienstterminalkontroller 42 an das Erweiterungsmodul 41 gegeben, beispielsweise zusammen mit der Objektidentifizierung und/oder des Kostenbetrags (Preis) des ausgelieferten Produkts oder der ausgelieferten Dienstleistung. Das Transaktionsmodul 412 kann aus dem ursprünglichen Kreditwert und dem tatsächlichen Kostenbetrag des ausgelieferten Produkts oder der ausgelieferten Dienstleistung den verbleibenden Kredit der betreffenden Transaktion bestimmen und, wie in der Figur 3 durch den Pfeil 80 angedeutet wird, die Instruktion "Enable Credit" mit dem verbleibenden Kredit an den Dienstterminalkontroller 42 geben, der diesen verbleibenden Kredit im Schritt 81 auf der Anzeige 45 des Dienstterminals 4 anzeigt. Das Transaktionsmodul 412 kann so ausgeführt werden, dass die Selektion von weiteren Produkten und/oder Dienstleistungen freigegeben wird solange der verbleibende Kredit einen vordefinierten Wert übersteigt oder das Transaktionsmodul 412 kann nach der Auslieferung eines Produkts oder einer Dienstleistung, wie in der Figur 3 durch den Pfeil 82 angedeutet wird die Instruktion "End Session" an den Dienstterminalkontroller 42 geben. Das Transaktionsmodul 412 übermittelt, wie in der Figur 3 durch den Pfeil 83 angedeutet wird, eine Auslieferungsbestätigung, die die Objektidentifizierung eines oder mehrerer ausgelieferten Produkte und/oder Dienstleistungen sowie den entsprechenden Kostenbetrag, eventuell eine zugehörige Währungsangabe und die Transaktionsnummer umfasst, über das Kommunikationsnetz 2', respektive die Kommunikationsverbindung 54 und die Dienstterminalzentrale 5, an die Dienstzentrale 3. Das Transaktionsmodul 412 kann auch so ausgeführt werden, dass es die erfassten Kostenbeträge für die einzelnen Transaktionen im Dienstterminal 4 zwischenspeichert und erst zu einem späteren Zeitpunkt, beispielsweise periodisch oder auf Anfrage der Dienstzentrale 3, im Batch-Modus an die Dienstzentrale 3 übermittelt.

In der Dienstzentrale 3 wird beispielsweise vom Transaktionsmodul 36, wie in der Figur 3 durch den Pfeil 84 angedeutet wird, eine Auslieferungsbestätigung über das Mobilfunknetz 2 an das betreffende Mobilgerät 1 übermittelt, beispielsweise in Form einer USSD- oder SMS-Meldung. Auf Grund der in der Dienstzentrale 3 eingetroffenen Auslieferungsbestätigung wird der darin angegebene Kostenbetrag unter Berücksichtigung der diesbezüglichen Währung, die in der Auslieferungsbestätigung enthalten ist oder aus einer Datenbank mit Informationen über Dienstterminals 4 für das betreffende Dienstterminal 4 bestimmt wird, dem betreffenden Kunden durch das Verrechnungsmodul 35 verrechnet. Das Verrechnungsmodul 35 belastet den Kostenbetrag beispielsweise dem durch die oben erwähnte IMSI bestimmten Kunden auf seinem Teilnehmerkonto in der Datenbank 37 oder auf einem Konto dieses Kunden bei einem Finanzdienstleister. Die Verrechnung der auf das Teilnehmerkonto belasteten Kostenbeträge kann beispielsweise über die Telefonrechnung des betreffenden Kunden erfolgen. Die Belastung der Kostenbeträge kann auch auf ein durch die IMSI oder die MSISDN bestimmtes, vorausbezahltes Konto erfolgen, so dass die persönliche Identität des Kunden anonym bleiben kann. Das vorausbezahlte Konto kann beispielsweise auch direkt auf der Chipkarte 11 eingerichtet sein.

In einer Ausführungsvariante umfasst das Dienstterminal 4 zudem einen Speicher mit einem darin gespeicherten Selektionsprogramm 415, das auf einem Prozessor des Mobilgeräts 1 ausführbar ist, beispielsweise auf dem Prozessor 111 der Chipkarte 11. Das Selektionsprogramm 415 ist beispielsweise ein Java-Applet (Java ist ein eingetragenes Warenzeichen der Firma Sun Microsystems) oder ein anderes plattformunabhängiges Programmobjekt. Das Selektionsprogramm 415 umfasst eine Inventarliste der im betreffenden Dienstterminal 4 aktuell verfügbaren Produkte und/oder Dienstleistungen, welche Liste durch entsprechende Softwarefunktionen im Dienstterminal 4 aktualisiert wird.

Das Selektionsprogramm 415 kann über eine kontaktlose Geräteschnittstelle 14'-14 vom Dienstterminal 4 an das Mobilgerät 1 übertragen werden, beispielsweise als Antwort auf eine entsprechende Anforderung vom Mobilgerät 1, die von einem Softwaremodul im Mobilgerät 1, das beispielsweise auf dem Prozessor 111 der Chipkarte 11 ausgeführt wird, generiert und über die kontaktlose Geräteschnittstelle 14-14' an das Dienstterminal 4 übertragen wird. Das Selektionsprogramm 415 könnte auch über das Mobilfunknetz 2, die Dienstzentrale 3, und das Kommunikationsnetz 2', respektive die Kommunikationsverbindung 54, vom Mobilgerät 1 angefordert und an das Mobilgerät 1 übertragen werden.

Durch die Ausführung des Selektionsprogramms 415 im Mobilgerät 1 werden die im Dienstterminal 4 verfügbaren Objekte und/oder Dienstleistungen auf der Anzeige 13 des Mobilgeräts 1 dem betreffenden Kunden zur Selektion angezeigt. Nach erfolgter Selektion des Kunden generiert das Selektionsprogramm 415 den Anforderungsbeleg 6', der zusätzlich zum Dienstcode 61 und der Dienstterminalidentifizierung 62 auch die Objektidentifizierung 63 enthält, und übermittelt diesen Anforderungsbeleg, wie oben beschrieben, unter Zuhilfenahme von Kommunikationsfunktionen des Mobilgeräts 1 an die Dienstzentrale 3.

Falls im Anforderungsbeleg 6' zusätzlich auch die Objektidentifizierung 63 übertragen wird (beispielsweise durch das Selektionsprogramm 415 oder durch den Kunden eingefügt), können die oben beschriebenen Schritte 73 bis 76 (siehe Figur 3) übergangen werden und vom Erweiterungsmodul 41 direkt die Instruktion "Allow Dispense" zusammen mit der betreffenden Objektidentifizierung dem Dienstterminalkontroller 41 gegeben werden.

## Patentansprüche

1. Transaktionsverfahren zwischen einem Kunden und einem von einer Vielzahl von Dienstterminals (4), welche Dienstterminals (4) durch Kunden selektierbare, kostenpflichtige Produkte und/oder Dienstleistungen vor Ort liefern, **dadurch gekennzeichnet,**
**dass** das Dienstterminal (4) über eine kontaktlose Geräteschnittstelle (14'-14) ein ausführbares Selektionsprogramm (415) an ein Mobilgerät (1) des Kunden überträgt, dass das Selektionsprogramm (415) auf einer Anzeige (13) des Mobilgeräts (1) im Dienstterminal (4) verfügbare Produkte und/oder Dienstleistungen zur Selektion durch den Kunden auflistet, und dass das Selektionsprogramm (415) auf Grund eines vom Kunden selektierten Produkts und/oder einer selektierten Dienstleistung einen Anforderungsbeleg (6') generiert,
**dass** der Anforderungsbeleg (6) eine Dienstterminalidentifizierung (62) des Dienstterminals (4) und eine Objektidentifizierung (63) eines gewünschten Produkts oder einer gewünschten Dienstleistung umfasst und mittels des tragbaren Mobilgeräts (1) über ein Mobilfunknetz (2) an eine Dienstzentrale (3) übermittelt wird,
**dass** die Dienstzentrale (3) die Kreditwürdigkeit des Kunden überprüft, von dem der Anforderungsbeleg übermittelt wurde, und bei positiver Kreditwürdigkeit einen Kreditbeleg, der mindestens einen Kreditwert und/oder die Objektidentifizierung (63) umfasst, über ein Kommunikationsnetz (2') an das durch die Dienstterminalidentifizierung (62) bestimmte Dienstterminal (4) übermittelt,
**dass** das Dienstterminal (4) auf Grund des empfangenen Kreditbelegs die Selektion mindestens eines der durch die Objektidentifizierung (63) bestimmten Produkte und/oder Dienstleistungen freigibt und entsprechend der vom Kunden getätigten Selektion das gewünschte Produkt oder die gewünschte Dienstleistung ausliefert und eine Auslieferungsbestätigung, die einen Kostenbetrag des ausgelieferten Produkts oder der ausgelieferten Dienstleistung umfasst, an die Dienstzentrale (3) übermittelt, und
**dass** die Dienstzentrale (3) den Kostenbetrag des ausgelieferten Produkts oder der ausgelieferten Dienstleistung dem Kunden verrechnet.

2. Transaktionsverfahren nach Anspruch 1, **dadurch gekennzeichnet, dass** das Dienstterminal (4) vor der Auslieferung des gewünschten Produkts oder der gewünschten Dienstleistung den Kunden auffordert, zur Bestätigung das gewünschte Produkt oder die gewünschte Dienstleistung auszuliefern, eine vordefinierte Anzahl Endziffern der Rufnummer des Mobilgeräts (1) einzugeben, und dass das Dienstterminal vom Kunden eingegebene Endziffem mit Endziffern vergleicht, die zusammen mit dem Kreditbeleg an das Dienstterminal (4) übertragen wurden.

3. Transaktionsverfahren nach einem der Ansprüche 1 oder 2, **dadurch gekennzeichnet, dass** die Dienstzentrale (3) den Kreditbeleg zusammen mit der Dienstterminalidentifizierung (62) des Dienstterminals (4) über das Kommunikationsnetz (2') an eine Dienstterminalzentrale (5) übermittelt, welche Dienstterminalzentrale (5) den Kreditbeleg über eine Kommunikationsverbindung (54) an das durch die Dienstterminalidentifizierung (62) bestimmte Dienstterminal (4) leitet.

4. Verkaufssystem, umfassend eine Vielzahl von Dienstterminals (4), welche Dienstterminals durch Kunden selektierbare, kostenpflichtige Produkte und/oder Dienstleistungen vor Ort liefern, **dadurch gekennzeichnet,**
**dass** die Dienstterminals (4) jeweils eine kontaktlose Geräteschnittstelle (14') umfassen, dass die Dienstterminals (4) jeweils eine Speichereinheit umfassen, in der ein Selektionsprogramm (415) gespeichert ist, durch welches Selektionsprogramm (415) ein Prozessor (111) eines Mobilgeräts (1) so steuerbar ist, dass der Prozessor (111) auf einer Anzeige (13) des Mobilgeräts (1) im Dienstterminal (4) verfügbare Produkte und/oder Dienstleistungen zur Selektion durch den Kunden auflistet und auf Grund eines vom Kunden selektierten Produkts und/oder einer selektierten Dienstleistung einen Anforderungsbeleg (6') generiert, und dass die Dienstterminals jeweils Mittel umfassen, um das Selektionsprogramm (415) über die kontaktlose Geräteschnittstelle (14'-14) auf ein Mobilgerät (1) zu übertragen,
**dass** das Verkaufssystem mindestens eine Dienstzentrale (3) umfasst, die Mittel umfasst, um Datenmeldungen von Mobilgeräten (1) über ein Mobilfunknetz (2) zu empfangen und um unter diesen Datenmeldungen Anforderungsbelege (6, 6') zu erkennen und entgegenzunehmen, welche Anforderungsbelege (6, 6') jeweils eine Objektidentifizierung (63) eines gewünschten Produkts oder einer gewünschten Dienstleistung sowie eine Dienstterminalidentifizierung (62) des Dienstterminals (4) umfassen, von welchem Dienstterminal (4) ein gewünschtes Produkt und/oder eine gewünschte Dienstleistung bezogen werden soll,
**dass** die Dienstzentrale (3) Mittel umfasst, um die Objektidentifizierung (63) dem Anforderungsbeleg (6') zu entnehmen und dass die Dienstzentrale (3) Mittel umfasst, um die Kreditwürdigkeit des Kunden, von dem der Anforderungsbeleg (6, 6') übermittelt wurde, zu überprüfen und bei positiver Kreditwürdigkeit einen Kreditbeleg, der mindestens einen Kreditwert und die Objektidentifizierung (63) umfasst, über ein Kommunikationsnetz (2') an das durch die Dienstterminalidentifizierung (62) bestimmte Dienstterminal (4) zu übermitteln,
**dass** die Dienstterminals (4) Mittel umfassen, um jeweils auf Grund des empfangenen Kreditbelegs die Selektion mindestens eines der Produkte und/oder mindestens einer der Dienstleistungen freizugeben und entsprechend der vom Kunden getätigten Selektion das gewünschte Produkt oder die gewünschte Dienstleistung auszuliefern und eine Auslieferungsbestätigung, die einen Kostenbetrag des ausgelieferten Produkts oder der ausgelieferten Dienstleistung umfasst, an die Dienstzentrale (3) zu übermitteln, und
**dass** die Dienstzentrale (3) Mittel umfasst, um den Kostenbetrag des ausgelieferten Produkts oder der ausgelieferten Dienstleistung dem Kunden zu verrechnen.

5. Verkaufssystem gemäss Anspruch 4, **dadurch gekennzeichnet, dass** das Verkaufssystem eine Dienstterminalzentrale (5) umfasst, die über das Kommunikationsnetz (2') mit der Dienstzentrale (3) verbunden ist und die Mittel umfasst, um den Kreditbeleg zusammen mit der Dienstterminalidentifizierung (62) von der Dienstzentrale (3) entgegenzunehmen und den Kreditbeleg über eine Kommunikationsverbindung (54) an das durch die Dienstterminalidentifizierung (62) bestimmte Dienstterminal (4) zu leiten.

6. Verkaufssystem gemäss einem der Ansprüche 4 oder 5, **dadurch gekennzeichnet, dass** das Dienstterminal (4) Mittel umfasst, um vor der Auslieferung des angeforderten Produkts vom Kunden anzufordern, zur Bestätigung das gewünschte Produkt oder die gewünschte Dienstleistung auszuliefern, eine vordefinierte Anzahl Endziffern der Rufnummer des Mobilgeräts (1) einzugeben, und dass das Dienstterminal (4) vom Kunden eingegebene Endziffern mit Endziffern vergleicht, die zusammen mit dem Kreditbeleg an das Dienstterminal (4) übertragen wurden.

## Claims

1. Transaction method between a customer and one of a multiplicity of service terminals (4) which service terminals (4) supply on location products and/or services, selectable by customers, subject to costs, **characterised**
**in that** the service terminal (4) transmits via a contactless interface (14' - 14) an executable selection program (415) to a mobile device (1) of the customer, the selection program (415) lists on the display (13) of the mobile device (1) products and/or services available in the service terminal (4) for selection by the customer, and the selection program (415) generates an order record (6') based on a product selected by the customer and/or a selected service,
**in that** the order record (6) comprises a service terminal identification (62) for the service terminal (4) and an object identification (63) for a desired product or a desired service and by means of the portable mobile device (1) transmits it via a mobile radio network (2) to a service centre (3),
**in that** the service centre (3) checks the credit worthiness of the customer from whom the order record was transmitted, and, in the case of positive credit worthiness, transmits a credit record comprising at least one credit value and/or the object identification (63) via a communication network (2') to the service terminal (4) identified through the service terminal identification (62),
**in that**, on the basis of the received credit record, the service terminal (4) releases the selection of at least one of the products and/or services identified through the object identification (63), and, corresponding to the selection made by the customer, supplies the desired product or the desired service and transmits to the service centre (3) a supply confirmation containing a cost amount for the supplied product or the supplied service, and
**in that** the service centre (3) bills to the customer the cost amount for the supplied product or the supplied service.

2. Transaction method according to claim 1, **characterised in that** before supply of the desired product or the desired service, as a confirmation of the desired product or the desired service to be supplied, the service centre (4) asks the customer to enter a predefined number of end digits of the call number of the mobile device (1), and **in that** the service terminal compares the end digits entered by the customer with end digits which have been transmitted to the service terminal (4) together with the credit record.

3. Transaction method according to one of the claims 1 or 2, **characterised in that** the service centre (3) transmits the credit record together with the service terminal identification (62) for the service terminal (4) via the communication network (2') to a service terminal centre (5), which service terminal centre (5) passes on the credit record via a communication link (54) to the service terminal (4) identified through the service terminal identification (62).

4. Sales system comprising a multiplicity of service terminals (4) which service terminals supply on location products and/or services selectable by customers, subject to costs, **characterised**
**in that** the service terminals (4) each comprise a contactless device interface (14'), the service terminals (4) each comprise a memory unit in which a selection program (415) is stored, through which selection program (415) a processor (111) of a mobile device (1) is controllable in such a way that the processor (111) lists on a display (13) of the mobile device (1) products and/or services available at the service terminal (4) for selection by the customer and generates an order record (6') based on a product selected by the customer or a service selected, and in that the service terminals each comprise means of transmitting the selection program (415) via the contactless interface (14'- 14) to a mobile device (1),
**in that** the sales system comprises at least one service centre (3) which comprises means of receiving data messages from mobile devices (1) via a mobile radio network (2), and of recognising and accepting order records (6, 6') from among these data messages, which order records (6, 6') each contain an object identification (63) for a desired product or a desired service and a service terminal identification (62) for the service terminal (4) from which service terminal a desired product and/or a desired service is supposed to be supplied,
**in that** the service centre (3) comprises means of taking the object identification (63) from the order record (6') and the service centre (3) comprises means of checking the credit worthiness of the customer from whom the order record (6, 6') has been transmitted, and, in the case of positive credit worthiness, of transmitting a credit record containing at least one credit value and the object identification via a communication network (2') to the service terminal (4) identified through the service terminal identification (62),
**in that** the service terminal (4) comprises means of releasing the selection of at least one of the products and/or at least one of the services, in each case based on the received credit record, and of supplying the desired product or the desired service corresponding to the selection made by the customer and of transmitting a supply confirmation to the service centre (3) containing a cost amount for the supplied product or the supplied service, and
**in that** the service centre (3) comprises means of billing to the customer the cost amount for the supplied product or the supplied service.

5. Sales system according to claim 4, **characterised in that** the sales system comprises a service terminal centre (5) which is connected via the communication network (2') to the service centre (3) and comprises means of receiving the credit record together with the service terminal identification (62) from the service centre (3) and of passing on, via a communication link (54), the credit record to the service terminal (4) identified through the service terminal identification (62).

6. Sales system according to one of the claims 4 or 5, **characterised in that** the service terminal (4) comprises means of asking the customer to enter a predefined number of end digits of the call number of the mobile device (1) before supply of the ordered product in order to confirm the desired product or the desired service to be supplied and **in that** the service terminal (4) compares the end digits entered by the customer with end digits which have been transmitted to the service terminal (4) with the credit record.

## Revendications

1. Procédé de transaction entre un client et un grand nombre de terminaux de service (4), terminaux de service (4) qui fournissent sur place des produits et/ou services payants sélectionnables par le client, **caractérisé en ce que**
le terminal de service (4) transmet par une interface sans contact de périphérique (14'-14) un programme de sélection exécutable (415) à un périphérique mobile (1) du client, **en ce que** le programme de sélection (415) liste sur un écran (13) du périphérique mobile (1) les produits et/ou services disponibles dans le terminal de service (4) pour la sélection par le client et **en ce que** le programme de sélection (415) génère sur la base d'un produit et/ou service sélectionné par le client une requête de commande (6'),
**en ce que** la requête de commande (6) comprend une identification de terminal de service (62) du terminal de service (4) et une identification d'objet (63) d'un produit souhaité ou d'un service souhaité et est transmis au moyen du périphérique mobile portable (1) par un réseau radio mobile de communication (2) à une centrale de services (3),
**en ce que** la centrale de services (3) vérifie la solvabilité du client ayant transmis une requête de commande et en cas de solvabilité positive, transmet un justificatif de crédit qui comprend au moins une valeur de crédit et/ou l'identification d'objet (63), à travers un réseau de communication (2') au terminal de service (4) défini par l'identification de terminal de service (62),
**en ce que** le terminal de service (4) déclenche sur la base du justificatif de crédit reçu la sélection d'au moins un des produits et/ou services définis par l'identification d'objet (63) et délivre le produit et/ou le service souhaité en fonction de la sélection actionnée par le client et transmet à la centrale de services (3) une confirmation de livraison qui comprend un montant du produit et/ou service fourni, et
**en ce que** la centrale de services (3) facture le client le montant du coût du produit ou du service fourni.

2. Procédé de transaction selon la revendication 1, **caractérisé en ce que** le terminal de service (4) invite avant la fourniture du produit ou service souhaité le client à saisir un nombre prédéfini de chiffres terminaux du numéro d'appel du périphérique mobile (1) afin de valider le produit ou le service souhaité et **en ce que** le terminal de service compare les chiffres terminaux saisis par le client avec des chiffres terminaux qui ont été transmis ensemble avec le justificatif de crédit au terminal de service (4).

3. Procédé de transaction selon l'une des revendications 1 ou 2, **caractérisé en ce que** la centrale de services (3) transmet le justificatif de crédit avec l'identification (62) du terminal de service (4) à travers le réseau de communication (2') à une centrale de terminal de service (5), centrale de terminal de service (5) qui transmet le justificatif de crédit par une connexion de communication (54) au terminal de service (4) déterminé par l'identification de terminal de service (62).

4. Système de vente, comprenant un grand nombre de terminaux de service (4), terminaux de service qui fournissent sur place des produits et services payants sélectionnables par des clients, **caractérisé**
**en ce que** les terminaux de service (4) comprennent respectivement une interface de périphérique (14') sans contact, en ce que les terminaux de service (4) comportent respectivement une unité de stockage dans laquelle est mémorisé un programme de sélection (415), programme de sélection (415) qui permet de commander un processeur (111) d'un périphérique mobile (1), en ce qu le processeur (111) liste sur un écran (13) du périphérique mobile (1) des produits et/ou services disponibles dans le terminal de service (4) pour être sélectionnés par le client et sur la base d'un produit et/ou service sélectionné par le client il génère une requête de commande (6') et en ce que les terminaux de service comprennent respectivement des moyens pour transmettre le programme de sélection (415) par l'intermédiaire de l'interface de périphérique sans contact (14'-14) à un périphérique mobile (1),
**en ce que** le système de vente comprend au moins une centrale de services (3) qui présente des moyens pour recevoir des messages de données envoyés par des périphériques mobiles (1) à travers un réseau mobile de communication (2) et pour reconnaître et réceptionner parmi ces messages de données des requêtes de commande (6, 6'), requêtes de commande (6, 6') qui comprennent respectivement une identification d'objet (63) du produit ou service souhaité ainsi qu'une identification (62) du terminal de service (4), terminal de service (4) depuis lequel est fourni le produit et/ou service souhaité,
**en ce que** la centrale de services (3) comprend des moyens pour déduire de la requête de commande (6') l'identification d'objet (63) et en ce que la centrale de services (3) comprend des moyens pour vérifier la solvabilité du client qui a transmis le bon de commande (6, 6'), et en cas de solvabilité positive, pour transmettre un justificatif de crédit qui comprend au moins une valeur de crédit et/ou l'identification d'objet (63), à travers un réseau de communication (2') au terminal de service (4) défini par l'identification de terminal de service (62),
**en ce que** les terminaux de service (4) comprennent des moyens pour libérer respectivement sur la base du justificatif de crédit reçu la sélection d'au moins l'un des produits et/ou services et en fonction de la sélection activée par le client, délivrer le produit ou service souhaité et de transmettre à la centrale de services (3) une confirmation de livraison qui comprend un montant des frais du produit ou service fourni,
**en ce que** la centrale de services (3) comprend des moyens débiter au client le montant des frais du produit ou service souhaités.

5. Système de vente selon la revendication 4, **caractérisé en ce que** le système de vente comprend une centrale de terminaux de service (5) qui est reliée à travers le réseau de communication (2') à la centrale de services (3) et comprend des moyens pour recevoir le justificatif de crédit avec l'identification de terminal de service (62) envoyée par la centrale de services (3) et pour transmettre le justificatif de crédit à travers une liaison de communication (54) au terminal de service (4) défini par l'indentification de terminal de service (62).

6. Système de vente selon l'une des revendications 4 ou 5, **caractérisé en ce que** le terminal de service (4) comprend des moyens pour inviter avant la fourniture du produit ou service souhaité le client à saisir un nombre prédéfini de chiffres terminaux du numéro d'appel du périphérique mobile (1) afin de valider le produit ou le service souhaité et **en ce que** le terminal de service compare les chiffres terminaux saisis par le client avec des chiffres terminaux qui ont été transmis ensemble avec le justificatif de crédit au terminal de service (4).
